**Europäisches Patentamt**

(19) **European Patent Office**

**Office européen des brevets**

(11) Numéro de publication: **0 320 379 B1**

## FASCICULE DE BREVET EUROPEEN

(12)

(45) Date de publication du fascicule du brevet:
**14.11.90**

(21) Numéro de dépôt: **88403104.8**

(22) Date de dépôt: **07.12.88**

(51) Int. Cl.⁵: **F25B 15/02**

(54) Installation de climatisation par absorption.

(30) Priorité: **07.12.87 FR 8716981**

(43) Date de publication de la demande:
**14.06.89 Bulletin 89/24**

(45) Mention de la délivrance du brevet:
**14.11.90 Bulletin 90/46**

(84) Etats contractants désignés:
**AT BE CH DE ES GB GR IT LI LU NL SE**

(56) Documents cités:
**EP-A- 0 119 776**
**DE-A- 2 807 990**
**DE-A- 3 233 649**
**FR-A- 1 547 138**
**US-A- 2 559 217**
**US-A- 2 729 952**
**US-A- 3 964 273**

(73) Titulaire: **ASSOCIATION POUR LA RECHERCHE ET LE DEVELOPPEMENT DES METHODES ET PROCESSUS INDUSTRIELS (ARMINES), 60, Boulevard Saint-Michel, F-75272 Paris Cédex 06(FR)**

(72) Inventeur: **Thuez, Jean Luc, 38 ter rue des Ursulines, F-78100 Saint Germain en Laye(FR)**
Inventeur: **Dehausse, Robert, 20 Avenue d'Estienne d'Orves, F-94340 Joinville(FR)**

(74) Mandataire: **Bruder, Michel, Cabinet Michel Bruder Conseil en Brevets 10, rue de la Pépinière, F-75008 Paris(FR)**

## Description

La présente invention concerne une installation de climatisation par absorption conçue pour utiliser plus particulièrement soit les rejets thermiques d'un moteur ou d'un appareil analogue, soit l'énergie solaire, et pouvant être utilisé soit sous forme fixe soit embarqué sur un véhicule.

Une installation de climatisation par absorption comporte principalement un bouilleur chauffé à haute température, à partir d'une source de chaleur quelconque, dans lequel un fluide frigorigène est chassé par vaporisation, un condenseur dans lequel le fluide frigorigène se liquéfie, un évaporateur dans lequel le frigorigène liquide se vaporise pour produire le froid recherché et un absorbeur dans lequel le frigorigène gazeux est réabsorbé dans la solution appauvrie avant d'être retourné au bouilleur par l'intermédiaire d'une pompe. Le bouilleur et le condenseur d une telle installation fonctionnent à une haute pression qui est la pression de condensation du fluide frigorigène, tandis que l'évaporateur et l'absorbeur fonctionnent à une basse pression qui est la pression d'évaporation du fluide frigorigène. Les circuits haute et basse pression sont reliés par une ou plusieurs pompes et des détendeurs qui peuvent être des pulvérisateurs.

Une installation de climatisation par absorption de ce type, ayant une enceinte haute pression contenant le bouilleur et le condenseur et une enceinte basse pression contenant l'évaporateur et l'absorbeur est décrit par exemple dans le brevet FR-A 1 547 138.

La présente invention concerne des perfectionnements apportés à une telle installation dans le but de la rendre compacte, ce qui facilite son emploi à bord d'un véhicule, et d'augmenter son rendement.

A cet effet cette installation de climatisation par absorption comportant une enceinte haute pression contenant un bouilleur chauffé à haute température, dans lequel un fluide frigorigène est chassé par vaporisation, et un condenseur sur lequel le fluide frigorigène se liquéfie, et une enceinte basse pression contenant un évaporateur sur lequel le frigorigène liquide se vaporise pour produire le froid recherché et un absorbeur sur lequel le frigorigène gazeux est réabsorbé dans la solution appauvrie avant d'être retourné au bouilleur par l'intermédiaire d'une pompe, est caractérisée en ce que les deux enceintes haute pression et basse pression ont chacune une enveloppe de forme générale torique, d'axe vertical commun, l'enceinte haute pression étant disposée au-dessus de l'enceinte basse pression et des moyens de refroidissement sont disposés dans l'espace central libre délimité par les parois cylindriques internes des deux enveloppes des deux enceintes, pour assurer l'échange partiel ou total de la puissance calorifique produite par la condensation, l'absorption ou éventuellement l'évaporation.

On décrira ci-après, à titre d'exemples non limitatifs, diverses formes d'exécution de la présente invention, en référence au dessin annexé sur lequel :

La figure 1 est une vue en coupe axiale et verticale d'une installation de climatisation par absorption suivant l'invention.

La figure 2 est une coupe en plan de l'installation de climatisation de la figure 1.

La figure 3 est une vue en coupe axiale et verticale d'une autre variante d'exécution de l'installation de climatisation par absorption dans le cas où elle est embarquée sur un véhicule.

La figure 4 est une vue en coupe axiale et verticale d'une autre variante d'exécution de l'installation de climatisation par absorption suivant l'invention.

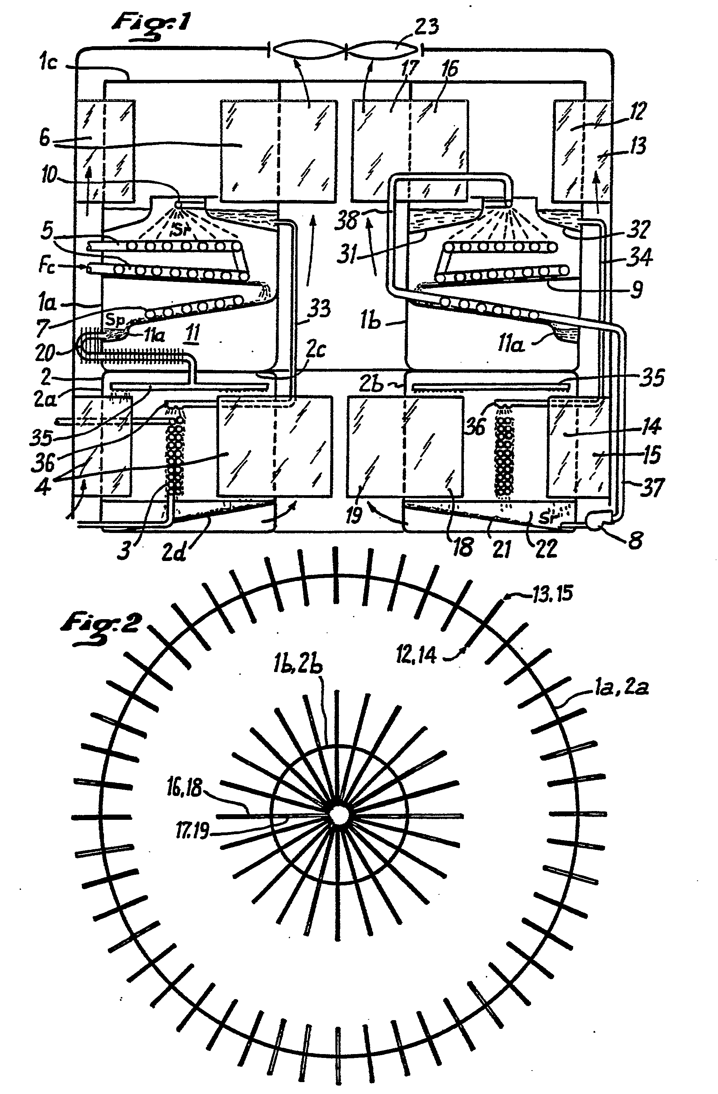

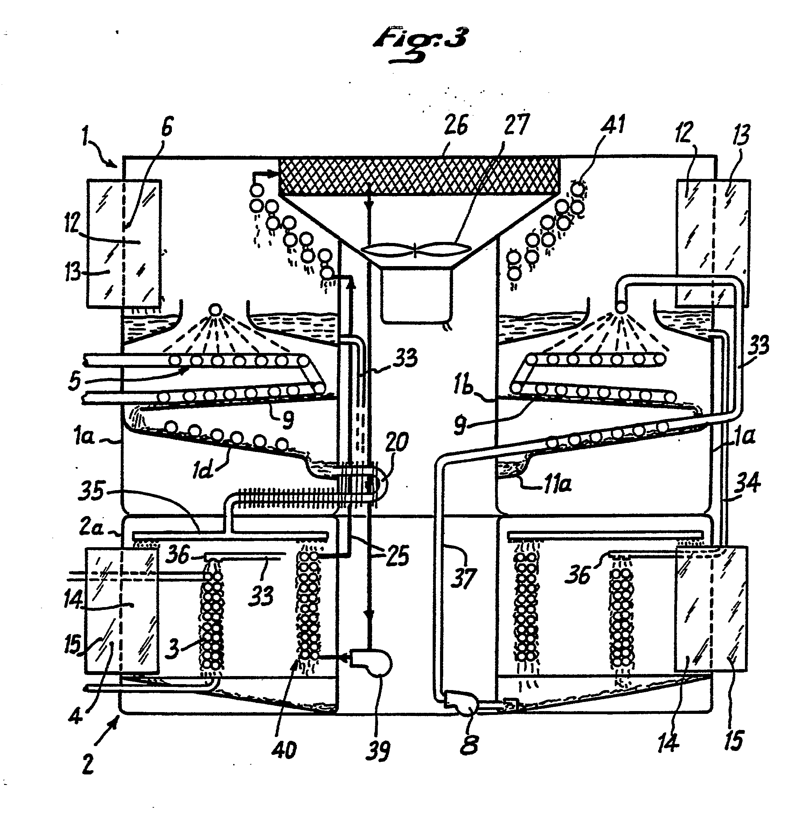

Si on se réfère aux figures 1 et 2, on voit que ces figures représentent une installation de climatisation par absorption comportant deux ensembles superposés à savoir une enceinte supérieure 1 à haute pression Pc et une enceinte inférieure 2 à basse pression Po. Ces deux enceintes 1 et 2 ont chacune une enveloppe de forme générale torique avec un axe vertical commun. Les enveloppes des deux enceintes 1,2 comprennent des parois externes cylindriques respectives 1a,2a et des parois internes cylindriques respectives 1b,2b.

L'enceinte supérieure haute pression 1 comporte également une paroi horizontale annulaire supérieure 1c et une paroi annulaire inférieure constituant le fond tronconique interne 1d, convergeant vers le haut, délimitant la partie active proprement dite de l'enceinte 1. Les quatre parois 1a,1b,1c,1d enferment un bouilleur 5, un condenseur 6 et inférieurement un échangeur de solutions 7. L'enceinte supérieure haute pression repose sur l'enceinte inférieure 2 par des entretoises verticales 11, constituant éventuellement des ailettes, et assurant la stabilité horizontale de l'enceinte supérieure 1.

De la même façon l'enceinte inférieure basse pression 2 comprend une paroi horizontale annulaire supérieure 2c et un fond tronconique 2d convergeant vers le haut. Les quatre parois 2a,2b,2c,2d de l'enceinte inférieure basse pression 2 enferment un évaporateur 3 et un absorbeur 4. Par ailleurs le fond tronconique 2d porte des ailettes de refroidissement radiales dont des parties 21 s'étendent à l'extérieur et des parties 22 s'étendent à l'intérieur, à travers le fond 2d.

Ainsi les enveloppes toriques des deux enceintes 1,2, du moins, en ce qui concerne l'enceinte supérieure 1, sa partie active, ont une section génératrice en forme de trapèze rectangle, à côté inférieur incliné de haut en bas en s'éloignant de l'axe vertical commun, du fait que leurs fonds 1d et 2d ont une forme tronconique convergeant vers le haut.

Dans la forme d'exécution de l'invention représentée sur les figures 1 et 2 les parois cylindriques externe 1a et interne 1b de l'enceinte supérieure haute pression 1 portent respectivement des ailettes de refroidissement radiales 12,13 et 16,17. De la même façon les parois cylindriques externe 2a et interne 2b de l'enceinte inférieure basse pression 2 portent respectivement des ailettes de refroidissement radiales 14,15 et 18,19. Toutes ces ailettes 12 à 19 sont réparties régulièrement autour de l'axe vertical commun des deux enceintes 1,2.

Toutes les ailettes de refroidissement 12 à 19 s'étendent verticalement en partie à l'intérieur des deux enceintes 1,2 et en partie à l'extérieur de celles-ci.

Les deux enceintes haute pression 1 et basse pression 2 sont superposées si bien que leurs parois cylindriques internes 1b,2b, de même diamètre, sont également superposées et forment un passage pour l'air de refroidissement s'écoulant naturellement vers le haut par convection, le long des parties externes 19 et 17 des ailettes portées par les parois internes 1b et 2b, comme il est indiqué par les flèches. L'air de refroidissement s'écoule également dans les canaux délimités par les ailettes radiales inférieures 21 et également le long des parties externes 15 et 13 des ailettes radiales portées par les parois externes 1a et 2a.

Comme il a été indiqué précédemment, l'enceinte supérieure haute pression 1 contient le bouilleur 5 qui est constitué par un serpentin alimenté par un fluide caloporteur chaud Fc qui peut être l'eau de refroidissement d'un moteur ou un rejet liquide de température convenable, ou un caloporteur qui va chercher sa chaleur par exemple sur l'échappement d'un moteur, sur un rejet gazeux ou sur un capteur solaire. Le bouilleur 5 est arrosé extérieurement par les jets d'une rampe annulaire de pulvérisateurs 10 située sensiblement à mi-hauteur dans l'enceinte 1, au-dessus du serpentin constituant le bouilleur 5. Ce serpentin est en partie soudé à une plaque annulaire tronconique 9, convergeant vers le bas, sur laquelle ruisselle, en direction de l'axe, la solution qui s'appauvrit par ébullition. Le condenseur 6 qui constitue la partie supérieure de l'enceinte haute pression 1, est formé par les parties internes 12 et 16 des ailettes radiales sur lesquelles se condensent les vapeurs de frigorigène dégagées par le bouilleur 5.

La vapeur de frigorigène qui est condensée, dans le condenseur supérieur 6, le long des ailettes 12,16, est recueillie dans une auge annulaire interne 31, solidaire de la paroi interne 1b, et dans une auge annulaire externe 32, solidaire de la paroi externe 1a, ces auges 31,32 recueillant le condensat de frigorigène étant disposées respectivement sous les ailettes 16 de la paroi interne 1b et les ailettes 12 de la paroi externe 1a. Ces auges 31,32 sont reliées à des conduits 33,34 s'étendant vers le bas et recueillant le frigorigène condensé.

Sur le fond interne 1d, de forme tronconique d'inclinaison opposée à celle de la plaque 9 du bouilleur, c'est-à-dire convergeant vers le haut, est soudé le serpentin de l'échangeur de solution 7. La solution pauvre en frigorigène $S_p$ tombant du bord de la plaque 9, à proximité de la paroi interne 1b, ruisselle sur l'ensemble fond 1d serpentin 7 et se rassemble dans une gouttière annulaire 11a adjacente à la paroi externe 1a, au point le plus bas de l'enceinte 1.

La solution pauvre en frigorigène Sp, qui est recueillie dans la gouttière 11a, à la partie inférieure de l'enceinte haute pression 1, est transmise, par gravité ou, suivant une variante, à l'aide d'une pompe, par des tubes ailetés 20 raccordés à la gouttière 11a, qui s'étendent à l'extérieur de l'enceinte 1 et conduisent, dans l'enceinte 2, à des pulvérisateurs horizontaux 35 disposés à la partie supérieure de l'enceinte basse pression 2. Par ailleurs les conduits 33,34 récupérant le frigorigène condensé sont reliés, dans l'enceinte inférieure basse pression 2, à des pulvérisateurs 36 disposés au-dessus de l'évaporateur 3, celui-ci étant réalisé sous la forme d'un serpentin disposé coaxialement dans l'enceinte inférieure basse pression 2. Un conduit 37 sur lequel est branchée une pompe de circulation 8, relie le fond 2d de l'enceinte basse pression 2, où est recueillie la solution régénérée de l'absorbeur 4, à l'échangeur des solutions 7. La solution réchauffée sort de cet échangeur par un tube 38 pour alimenter la conduite annulaire des pulvérisateurs 10.

L'installation suivant l'invention, constituée des enceintes superposées 1,2, peut être avantageusement logée à l'intérieur d'un capotage 24 ouvert à sa partie inférieure pour permettre l'entrée d'air de refroidissement. La paroi horizontale supérieure du capotage 24 est percée d'une ou verture centrale dans laquelle est logé un ventilateur 23 d'axe vertical, pour augmenter le débit d'air à travers l'installation.

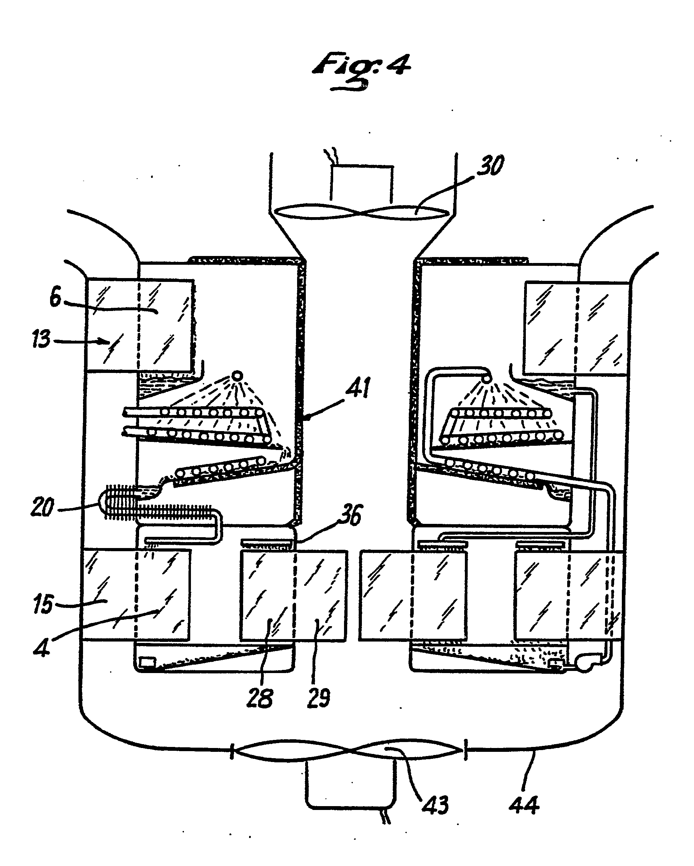

Dans la variante d'exécution représentée sur la figure 3 l'installation comprend un groupe de refroidissement additionnel constitué d'un radiateur 26 disposé dans la partie extrême supérieure du conduit délimité par la paroi interne 1b de l'enceinte supérieure haute pression 1, d'un ventilateur 27 disposé dans ce même conduit en dessous du radiateur 26 et d'une tubulure 25 constituant un circuit fermé pour la circulation d'un fluide caloporteur mis en mouvement par une pompe 39 branchée sur cette tubulure. Cette tubulure 25 est raccordée en série, ou en variante en parallèle, à un serpentin 40 logé dans l'enceinte inférieure basse pression 2 pour constituer une partie de l'absorbeur 4, et à un autre serpentin 41 logé dans l'enceinte haute pression 1 et constituant une partie du condenseur 6. Avec une telle disposition une partie de la puissance de la condensation est évacuée par les ailettes 12,13 portées par la paroi externe 1a de l'enceinte haute pression 1 et l'autre partie de cette puissance est évacuée par l'échangeur 41 vers le groupe de refroidissement 25,26,27,39. De même, une partie de la puissance d'absorption est évacuée par les ailettes 14,15 portées par la paroi externe 2a de l'enceinte basse pression 2 et l'autre partie est évacuée par l'échangeur 40 vers le groupe de refroidissement 25,26,27,39.

Dans la forme d'exécution de l'invention représentée sur la figure 3 les pentes des plaques 9 et 1d sont inversées par rapport à celles indiquées à propos de la figure 1. Autrement dit la plaque 9 a une forme tronconique convergeant vers le haut et le fond 1d a une forme tronconique convergeant vers le bas si bien que la gouttière 11a se trouve maintenant adjacente à la paroi interne 1b.

Dans la variante d'exécution de l'invention représentée sur la figure 4 le froid produit par l'appareil est transmis directement à un courant d'air passant dans le conduit central des enceintes 1 et 2. L'évaporateur est constitué par des ailettes radiales 28,29 dont les parties 28 intérieures à l'enceinte 2 reçoivent le ruissellement du frigorigène issu d'un pulvérisateur 36 et dont les parties extérieures 29 assurent le refroidissement du courant d'air qui est accéléré par un ventilateur 30 placé dans l'axe et à la partie supérieure de la conduite centrale, celle-ci ayant été munie d'un isolant thermique 41 sur les parois situées au-dessus des ailettes 29. La chaleur des ailettes 15 de l'absorbeur 4, celle des tubes ailetés 20 du retour de solution appauvrie en frigorigène $S_p$ et celle des ailettes 13 du condenseur 6 est évacuée par un courant d'air périphérique produit par un ventilateur inférieur 43 et un capotage extérieur 44. Le reste de l'installation reprend les réalisations des figures 1,2 et 3.

Bien que dans la description qui précéde les diverses formes d'exécution de l'installation suivant l'invention comportent des ailettes 12, 13, 14, 15, 16, 17, 18, 19, 28, 29 pour assurer l'échange partiel ou total de la puissance calorifique produite par la condensation et l'absorption, ainsi que, pour la variante de la figure 4, par l'évaporateur, il va de soi que ces ailettes pourraient être remplacées par tout autre organe pouvant assumer la même fonction et on pourrait employer à cet effet des caloducs de formes similaires.

**Revendications**

1.- Installation de climatisation par absorption comportant une enceinte haute pression (1) contenant un bouilleur (5) chauffé à haute température, dans lequel un fluide frigorigène est chassé par vaporisation, et un condenseur (6) sur lequel le fluide frigorigène se liquéfie, et une enceinte basse pression (2) contenant un évaporateur (3) sur lequel le frigorigène liquide se vaporise pour produire le froid recherché et un absorbeur (4) sur lequel le frigorigène gazeux est réabsorbé dans la solution appauvrie avant d'être retourné au bouilleur (5) par l'intermédiaire d'une pompe (8), caractérisée en ce que les deux enceintes haute pression (1) et basse pression (2) ont chacune une enveloppe de forme générale torique, d'axe vertical commun, l'enceinte haute pression (1) étant disposée au-dessus de l'enceinte basse pression (2), et des moyens de refroidissement (16-19) sont disposés dans l'espace central libre délimité par les parois cylindriques internes (1b,2b) des deux enveloppes des deux enceintes (1,2), pour assurer l'échange partiel ou total de la puissance calorifique produite par la condensation, l'absorption ou éventuellement l'évaporation.

2.- Installation suivant la revendication 1 caractérisée en ce que les enveloppes toriques ont une section génératrice en forme de trapèze rectangle, à côté supérieur horizontal et à côté inférieur incliné, c'est-à-dire que leurs fonds (1d,2d) ont une forme tronconique.

3.- Installation suivant l'une quelconque des revendications précédentes caractérisée en ce que le bouilleur (5) est constitué en partie d'un serpentin soudé à une plaque annulaire tronconique (9) le tout recevant des jets de pulvérisateurs (10) situés au-dessus du bouilleur (5).

4.-Installation suivant l'une quelconque des revendications précédentes caractérisée en ce que l'échangeur de solution (7), placé en dessous du bouilleur (5) dans l'enceinte supérieure haute pression (1), est soudé à une plaque annulaire tronconique (1d) d'inclinaison opposée à celle (9) du bouilleur (5), la solution appauvrie en frigorigène ($S_p$) ruisselant sur le serpentin (7) et la plaque tronconique (1d).

5.- Installation suivant l'une quelconque des revendications précédentes caractérisée en ce que chacune des enceintes (1,2) comporte des ailettes radiales (12-19) sur ses parois cylindriques (1a,1b;2a,2b) constituant l'extérieur et l'intérieur de l'enveloppe torique, ces ailettes traversant la paroi et s'étendant aussi bien à l'intérieur (12,14,16,18) que vers l'extérieur (13,15,17,19) des enceintes (1,2), les parties extérieures des ailettes étant refroidies en convection libre par l'air ambiant tandis que les parties intérieures des ailettes constituent, dans l'enceinte basse pression (2), les surfaces de ruissellement de l'absorbeur (14,18) et, dans l'enceinte haute pression (1), les surfaces de condensation (12,16).

6.- Installation suivant l'une quelconque des revendications précédentes caractérisée en ce qu'elle comporte un refroidisseur de la solution appauvrie en frigorigène ($S_p$), lequel est formé de tubes ailetés (20) placés à l'extérieur des deux enceintes (1,2), et un refroidisseur de la solution riche ($S_r$) formé d'ailettes radiales (21,22) traversant le fond (2d) de l'enceinte basse pression (2).

7.- Installation suivant l'une quelconque des revendications précédentes caractérisée en ce qu'elle comporte un ventilateur (23) et un capotage externe (24) qui est tracé pour forcer le passage de l'air entre les parties extérieures des ailettes, afin de les refroidir par l'air ambiant.

8.- Installation suivant l'une quelconque des revendications précédentes caractérisée en ce qu'elle comporte un circuit (25) de circulation d'un fluide caloporteur se refroidissant dans un radiateur (26) placé au centre de l'installation dans le courant d'air d'un ventilateur (27), afin d'évacuer partiellement la puissance thermique du condenseur et de l'absorbeur.

9.- Installation suivant l'une quelconque des revendications précédentes caractérisée en ce que l'évaporateur est constitué par des ailettes radiales (28,29) traversant la paroi cylindrique interne (2b) de l'enceinte basse pression (2), afin de refroidir directement le flux d'air de climatisation, ces ailettes recevant, sur leurs parties internes (28), le ruissellement du fluide frigorigène, tandis que leurs parties externes (29) sont traversées par le flux d'air à rafraîchir qui est accéléré par un ventilateur central (30).

10.- Installation suivant l'une quelconque des revendication précédentes caractérisée en ce qu'elle comporte, à la place des ailettes (12-19,28,29), des plaques caloducs de même forme.

## Claims

1. Installation for air-conditioning by absorption comprising a high-pressure enclosure (1) containing a boiler (5) heated to high temperature, in which a refrigerant is driven by vaporization, and a condenser (6) on which the refrigerant is liquefied, and a low-pressure enclosure (2) containing an evaporator (3) on which the liquid refrigerant is vaporized to produce the desired cold and an absorber (4) on which the gaseous refrigerant is re-absorbed in the depleted solution before being returned to the boiler (5) via a pump (8), characterized in that the two high-pressure (1) and low-pressure (2) enclosures each have a generally toric-shaped casing with a common vertical axis, the high-pressure enclosure (1) being located above the low-pressure enclosure (2) and cooling means (16-19) are arranged in the central free space delimited by the cylindrical inner walls (1b, 2b) of the two casings of the two enclosures (1, 2), in order to ensure the partial or total exchange of the heat energy produced by condensation, absorption and possibly evaporation.

2. Installation according to claim 1, characterized in that the toric casings have a generatrix section in the form of a rectangular trapezium, with horizontal upper side and inclined lower side, i.e. their bottoms (1d, 2d) have a truncated shape.

3. Installation according to either one of the preceding claims, characterized in that the boiler (5) is constituted in part by a oil welded to a truncated annular plate (9), the whole receiving jets from sprays (10) located above the boiler (5).

4. Installation according to any one of the preceding claims, characterized in that the solution exchanger (7), placed below the boiler (5) in the upper high-pressure enclosure (1), is welded to a truncated annular plate (1d) with inclination opposite that (9) of the boiler (5), the solution poor in refrigerant (Sp) trickling over the coil (7) and the truncated plate (1d).

5. Installation according to any one of the preceding claims, characterized in that each of the enclosures (1, 2) comprises radial fins (12-19) on its cylindrical walls (1a, 1b; 2a, 2b) constituting the outside and inside of the toric casing, these fins passing through the wall and extending both inwardly (12, 14, 16, 18) and outwardly (13, 15, 17, 19) of the enclosures (1, 2), the outer parts of the fins being cooled in free convection by the ambient air whilst the inner parts of the fins constitute, in the low-pressure enclosure (2), the trickling surfaces of the absorber (14, 18) and, in the high-pressure enclosure (1), the condensation surfaces (12, 16).

6. Installation according to any one of the preceding claims, characterized in that it comprises a cooler of the solution poor in refrigerant (Sp), which is formed by finned tubes (20) placed outside the two enclosure (1, 2), and a cooler of the rich solution (Sr) formed by radial fins (21, 22) traversing the bottom (2d) of the low-pressure enclosure (2).

7. Installation according to any one of the preceding claims, characterized in that it comprises a ventilator (23) and an outer hood (24) which is designed to force the passage of the air between the outer parts of the fins, in order to cool them by the ambient air.

8. Installation according to any one of the preceding claims, characterized in that it comprises a circuit (25) for circulation of a heat-transfer fluid cooling in a radiator (26) placed at the centre of the installation in the air stream of a ventilator (27), in ordre partially evacuate the heat energy of the condenser and of the absorber.

9. Installation according to any one of the preceding claims, characterized in that the evaporator is constituted by radial fins (28, 29) passing through the inner cylindrical wall (2b) of the low-pressure enclosure (2), in order directly to cool the flow of air-conditioning air, these fins receiving, on their inner parts (28), the trickling of the refrigerant, whilst their outer parts (29) are traversed by the air flow to be cooled, which is accelerated by a central ventilator (30).

10. Installation according to any one of the preceding claims, characterized in that it comprises, in place of the fins (12-19, 28, 29), heat pipe plates of the same shape.

## Patentansprüche

1. Absorptionsklimaanlage mit einem Hochdruckbereich (1), der einen mit hoher Temperatur beheizten Austreiber (5) umfaßt, in dem ein Kältemittel durch Verdampfung ausgetrieben wird, und einen Kondensator (6), in dem das Kältemittel verflüssigt wird, und mit einem Niederdruckbereich (2), der einen Verdampfer (3) umfaßt, in dem das flüssige Kältemittel zur Erzeugung der gewünschten Kälte verdampft wird, und einen Absorber (4) in dem das gasförmige Kältemittel von der armen Lösung aufgenommen wird, bevor es mittels einer Pumpe (8) zum Austreiber (5) zurückgeleitet wird, dadurch gekennzeichnet, daß der Hochdruckbereich (1) und der Niederdruckbereich (2) jeweils von einer im allgemeinen ringförmigen Umhüllung mit gemeinsamer vertikaler Achse umgeben werden, wobei sich der Hochdruckbereich (1) über dem Niederdruckbereich (2) befindet und Kühlmittel (16–19) im zentralen, freien, von den zylindrischen Innenwänden (1b, 2b) der zwei dem Hochdruck- bzw. dem Niederdruckbereich (1, 2) zugeordneten Umhüllungen begrenzten Raum angeordnet sind, um den teilweisen oder vollständigen Austausch der durch die Kondensation, die Absorption oder gegebenenfalls die Verdampfung erzeugten Wärmeleistung sicherzustellen.

2. Anlage nach Anspruch 1, dadurch gekennzeichnet, daß die ringförmigen Umhüllungen einen erzeugenden Querschnitt in Form eines rechtwinkligen Trapezes mit einer horizontalen oberen Seite und einer derart geneigten unteren Seite aufweisen, daß ihre Böden (1d, 2d) kegelstumpfförmig gestaltet sind.

3. Anlage nach einem der vorhergehenden Ansprüche, dadurch gekennzeichnet, daß der Austreiber (5) zum Teil von serpentinartigen Windungen gebildet wird, die mit einer ringförmigen, kegelstumpfförmigen Platte (9) verbunden sind, und zur Gänze den Sprühstrahlen von oberhalb des Austreibers (5) angeordneten Zerstäubern (10) ausgesetzt ist.

4. Anlage nach einem der vorhergehenden Ansprüche, dadurch gekennzeichnet, daß der unterhalb des Austreibers (5) im oberen Hochdruckbereich (1) angeordnete Temperaturwechsler (7) der Lösung mit einer ringförmigen, kegelstumpfförmigen Platte (1d) verbunden ist, deren Neigung zu der der Platte (9) des Austreibers (5) entgegengesetzt ist, wobei die an Kältemittel arme Lösung ($S_p$) über die serpentinenartigen Windungen (7) und die kegelstumpfförmige Platte (1d) rieselt.

5. Anlage nach einem der vorhergehenden Ansprüche, dadurch gekennzeichnet, daß jeder der Bereiche (1, 2) radiale Flügel (12, 19) auf seinen die Außenseite und die Innenseite der ringförmigen Umhüllung bildenden zylindrischen Wänden (1a, 1b; 2a, 2b) umfaßt, daß diese Flügel die Wand durchqueren und sich sowohl nach der Innenseite (12, 14, 16, 18) als auch nach der Außenseite (13, 15, 17, 19) der Bereiche (1, 2) erstrecken, wobei die äußeren Abschnitte der Flügel in freier Konvektion durch die Umgebungsluft gekühlt werden, während die inneren Abschnitte der Flügel im Niederdruckbereich (2) die Rieselflächen (14, 18) des Absorbers und im Hochdruckbereich (1) die Kondensationsflächen (12, 16) bilden.

6. Anlage nach einem der vorhergehenden Ansprüche, dadurch gekennzeichnet, daß sie einen Kühler für die an Kältemittel arme Lösung ($S_p$) umfaßt, der von Rippenrohren (20) gebildet wird, die außerhalb der beiden Bereiche (1, 2) angeordnet sind, und einen Kühler für die reiche Lösung ($S_r$), der von Radialflügeln (21, 22) gebildet wird, die den Boden (2d) des Niederdruckbereichs (2) durchqueren.

7. Anlage nach einem der vorhergehenden Ansprüche, dadurch gekennzeichnet, daß sie einen Lüfter (23) und eine äußere Haube (24) umfaßt, die so gestaltet ist, daß sie den Luftdurchtritt zwischen den äußeren Abschnitten der Flügel zu deren Kühlung durch die Umgegungsluft fördert.

8. Anlage nach einem der vorhergehenden Ansprüche, dadurch gekennzeichnet, daß sie einen Kreislauf (25) für einen Wärmeträger umfaßt, der in einem Kühler (26) kühlbar ist, der im Zentrum der Anlage im Luftstrom eines Lüfters (27) angeordnet ist, um teilweise die Wärmeleistung des Kondensators und des Absorbers abzuführen.

9. Anlage nach einem der vorhergehenden Ansprüche, dadurch gekennzeichnet, daß der Verdampfer von Radialflügeln (28, 29) gebildet wird, die die zylindrische Innenwand (2b) des Niederdruckbereichs (2) durchqueren, um direkt den klimatisierenden Luftstrom zu kühlen, wobei diese Flügel auf ihren inneren Abschnitten (28) vom Kältemittel berieselt werden, während ihre äußeren Abschnitte (29) von dem zu kühlenden Luftstrom bestrichen werden, der durch einen zentralen Lüfter (30) beschleunigt wird.

10. Anlage nach einem der vorhergehenden Ansprüche, dadurch gekennzeichnet, daß sie anstelle der Flügel (12–19, 18, 29) Wärmeleitplatten gleicher Form aufweist.

Fig.1

Fig.2

*Fig.3*

*Fig. 4*